# EUROPEAN PATENT APPLICATION

(11) **EP 4 645 509 A1**
(43) Date of publication of application: **05.11.2025**
(21) Application number: 23911782.3
(22) Date of filing: 15.12.2023
(51) Int. Cl.: H01M 10/0587, H01M 4/134, H01M 4/38, H01M 10/052, H01M 50/449, H01M 50/463

(54) **LITHIUM SECONDARY BATTERY AND SEPARATOR**

(30) Priority: 27.12.2022 JP 2022210611
(71) Applicant: Panasonic Intellectual Property Management Co., Ltd., Kadoma-shi, Osaka 571-0057 (JP)
(72) Inventor: MIYAMAE, Ryohei, Kadoma-shi, Osaka 571-0057 (JP); KONDO, Shinichiro, Kadoma-shi, Osaka 571-0057 (JP); KANO, Akira, Kadoma-shi, Osaka 571-0057 (JP)
(74) Representative: Novagraaf International SA
(86) International application number: PCT/JP2023/045073
(87) International publication number: WO 2024/143001

(57) **Abstract**

A lithium secondary battery includes a positive electrode, a negative electrode, a separator disposed between the positive and negative electrodes, and a nonaqueous electrolyte. The positive electrode and the negative electrode are wound with the separator interposed between the positive and negative electrodes, to constitute an electrode group having a plurality of turns. At the negative electrode, lithium metal deposits during charging, and the lithium metal dissolves during discharging. The separator has an elongated shape having a length D1 in a first direction parallel to a winding axis of the electrode group, and a length D2 in a second direction perpendicular to the first direction, where D1 < D2. The separator has a substrate layer, and a spacer layer. The spacer layer includes a linear first protruding portion having a first pattern, and in a longitudinal section including the winding axis of the electrode group, a plurality of cross sections of the first protruding portions are aligned in a radial direction of the longitudinal section, forming a row.

## Description

### [Cross Reference to Related Application]

The present disclosure claims priority with respect to the Japanese Patent Application No. 2022-210611 filed on December 27, 2022, and the entire content of the patent application is incorporated herein by reference into the present specification.

### [Technical Field]

The present disclosure relates to a lithium secondary battery and a separator.

### [Background Art]

Lithium-ion batteries are known as high-capacity nonaqueous electrolyte secondary batteries. As high-capacity nonaqueous electrolyte secondary batteries superior to lithium-ion batteries, lithium secondary batteries (lithium-metal secondary batteries) are promising. In a lithium secondary battery, during charging, lithium metal deposits on the negative electrode, and the lithium metal dissolves during discharging, to be released as lithium ions into the nonaqueous electrolyte.

In a lithium secondary battery, in which lithium metal deposits on the negative electrode during charging, it is necessary to ensure a space for lithium to deposit, by providing a spacer between the separator and the electrode.

Patent Literature 1 proposes "a lithium secondary battery including: a positive electrode, a negative electrode, a separator disposed between the positive electrode and the negative electrode; and a nonaqueous electrolyte having lithium ion conductivity, wherein lithium metal deposits on the negative electrode during charging, and the lithium metal dissolves from the negative electrode during discharging, a spacer is provided between the separator and at least one of the positive electrode and the negative electrode, a first length of the separator in a first direction D1 is shorter than a second length of the separator in a second direction D2 intersecting the first direction D1, and in a cross section of the spacer taken along a thickness direction of the separator and the first direction D1, at least one of an angle on the spacer side formed between the separator and the spacer and an angle on the spacer side formed between the spacer and the electrode in contact with the spacer is greater than 90°."

### [Citation List]

### [Patent Literature]

Patent Literature 1: International Publication WO2021/192645

### [Summary of Invention]

### [Technical Problem]

However, simply providing a spacer between the separator and the electrodes is not enough to sufficiently ensure the space for lithium to deposit. If the space for lithium to deposit is insufficient, the electrode group swells with repeated charging and discharging, and the capacity retention rate of the lithium secondary battery decreases.

### [Solution to Problem]

One aspect of the present disclosure relates to a lithium secondary battery, including: a positive electrode, a negative electrode, a separator disposed between the positive electrode and the negative electrode, and a nonaqueous electrolyte, wherein the positive electrode and the negative electrode are wound with the separator interposed between the positive electrode and the negative electrode, to constitute an electrode group having a plurality of turns, at the negative electrode, lithium metal deposits during charging, and the lithium metal dissolves during discharging, the separator has an elongated shape having a length D1 in a first direction parallel to a winding axis of the electrode group, and a length D2 in a second direction perpendicular to the first direction, where D1 < D2, the separator has a substrate layer, and a spacer layer, the spacer layer includes a linear first protruding portion having a first pattern, and in a longitudinal section including the winding axis of the electrode group, a plurality of cross sections of the first protruding portions are aligned in a radial direction of the longitudinal section, forming a row.

Another aspect of the present disclosure relates to a separator which has an elongated shape having a length D1 in a first direction and a length D2 in a second direction perpendicular to the first direction, where D1<D2, including: a substrate layer, and a spacer layer, wherein the spacer layer includes a linear first protruding portion having a first pattern, and when a positive electrode and a negative electrode are wound with the separator interposed between the positive electrode and the negative electrode, to constitute an electrode group having a plurality of turns, the electrode group having a winding axis parallel to the first direction, in a longitudinal section including the winding axis of the electrode group, a plurality of cross sections of the first protruding portions are aligned in a radial direction of the longitudinal section, forming a row.

### [Advantageous Effects of Invention]

According to the present disclosure, the swelling of electrode group with repeated charging and discharging is suppressed, and the capacity retention rate of the lithium secondary battery is improved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1A] Diagrams schematically illustrating a longitudinal section including the winding axis of an electrode group of a lithium secondary battery according to an embodiment of the present disclosure.
[FIG. 1B] A schematic longitudinal sectional view of an example of a lithium secondary battery according to an embodiment of the present disclosure.
[FIG. 2] A schematic partial sectional view of the lithium secondary battery of FIG. 1.
[FIG. 3] A top view of an example of a pattern of a spacer.
[FIG. 4] A partially enlarged view of FIG. 3.
[FIG. 5] A top view of another example of the pattern of the spacer.
[FIG. 6] A top view of another example of the pattern of the spacer.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure encompasses a combination of matters recited in any two or more claims selected from plural claims in the appended claims. In other words, as long as no technical contradiction arises, matters recited in any two or more claims selected from plural claims in the appended claims can be combined.

### (Lithium secondary battery)

The lithium secondary battery according to an embodiment of the present disclosure includes a positive electrode, a negative electrode, a separator disposed between the positive electrode and the negative electrode, and a nonaqueous electrolyte. At the negative electrode, lithium metal deposits during charging, and the lithium metal dissolves during discharging. Specifically, the negative electrode has at least a negative electrode current collector, and lithium metal deposits on the negative electrode current collector. The nonaqueous electrolyte has lithium ion conductivity. The lithium secondary battery is sometimes called a lithium-metal secondary battery.

In a lithium secondary battery, for example, 70% or more of the rated capacity develops through deposition and dissolution of lithium metal. The electron migration at the negative electrode during charging and during discharging is mainly due to the deposition and dissolution of lithium metal at the negative electrode. Specifically, 70 to 100% (e.g., 80 to 100% or 90 to 100%) of the electron migration (in other words, current flow) at the negative electrode during charging and during discharging is due to the deposition and dissolution of lithium metal. That is, the negative electrode in the lithium secondary battery differs from a negative electrode in which the electron migration at the negative electrode during charging and during discharging is mainly due to the absorption and release of lithium ions into or from the negative electrode active material (e.g., graphite).

The positive electrode, the negative electrode, and the separator are sometimes collectively referred to as an "electrode group". The positive electrode and the negative electrode are wound with the separator disposed between the positive electrode and the negative electrode, to constitute an electrode group having a plurality of turns. When forming a wound electrode group, usually, a belt-like positive electrode, a belt-like negative electrode, and a belt-like separator are used.

### (Separator)

The separator has an elongated shape having a length D1 in a first direction and a length D2 in a second direction perpendicular to the first direction, where D1 < D2. The separator has a substrate layer, and a spacer layer. The spacer layer includes a linear first protruding portion having a first pattern. The first direction is a direction along the winding axis.

In a longitudinal section including the winding axis of the electrode group (hereinafter, sometimes simply referred to as a "longitudinal section of the electrode group"), a plurality of cross sections of the first protruding portions are aligned in the radial direction of the longitudinal section (in the second direction when the electrode group is unfolded), forming a row. Note that the first protruding portions in all the turns of the separator constituting the electrode group may not necessarily form a row in the above longitudinal section. For example, of the plurality of turns constituting the electrode group, in the turns constituted of the separator, the cross section of the first protruding portion to constitute a row may be present every other turn. In the turns constituted of the separator, the cross section of the first protruding portion to constitute a row may be present every other two turns.

Here, one row is defined as "a group of cross sections of the first protruding portions that are aligned in the radial direction (second direction), forming a row, in the region from the winding axis (center) to the peripheral surface in a longitudinal section of the electrode group". That is, in a longitudinal section of the electrode group, a plurality of pairs of two rows extending along the radial direction are observed with an interval therebetween in the first direction.

In each row, it is desirable that the plurality of cross sections of the first protruding portions are arranged as orderly as possible. In this case, the first protruding portions can be overlapped with each other with a sufficient overlapping width. The larger the overlapping width of the first protruding portions, the more the function of the spacer layer can be enhanced. That is, the function of securing the space for lithium to deposit can be enhanced.

In the radial direction of the longitudinal section of the electrode group, the overlapping widths of any 10 pairs of cross sections of the first protruding portions adjacent to each other are desirably, for example, half or more the line width of the first protruding portion, and may be 60% or more, or 70% or more of the line width thereof. When the cross sections of the first protruding portions overlap each other with such a large overlapping width, the deformation of the first protruding portion is significantly suppressed. Thus, more space can be secured within the electrode group. The any 10 pairs may be each independently selected from any row in any section of the electrode group, and may not be necessarily selected from one row, for example.

It is to be noted, however, that all pairs of cross sections of the first protruding portions adjacent to each other may not necessarily have the above overlapping width. For example, within the row, the average overlapping width of the cross sections of the first protruding portions adjacent to each other may be half or more (even 60% or more, or 70% or more of) the line width of the first protruding portion. The average overlapping width within the row may be calculated by measuring the overlapping widths for all pairs of the cross sections of the first protruding portions adjacent to each other included in one row, and averaging them.

When observing any longitudinal section of the electrode group, the average overlapping width may not necessarily be half or more the line width of the first protruding portion in all of the plurality of observed rows. It is desirable, however, that in a half or more of the plurality of observed rows, the average overlapping width is half or more (further 60% or more, or 70% or more of) the line width of the first protruding portion, and it is more desirable that in all of the plurality of observed rows, the average overlapping width is half or more (furthermore, 60% or more, or 70% or more of) the line width of the first protruding portion.

It is desirable that not only the cross sections of the first protruding portions adjacent to each other, but also as many cross sections of the first protruding portions as possible consecutively have a sufficient overlapping width, without much deviation from the radial direction or the direction parallel to the second direction. For example, within the row, all of the overlapping widths of the cross sections of the first protruding portions in any four consecutive layers may be half or more the line width of the first protruding portion. In other words, of the cross sections of the first protruding portions in four consecutive layers, with respect to the cross sections in the two layers whose positions in the first direction deviate most from each other, too, it is desirable that the overlapping width is half or more, even 60% or more, and even 70% or more of the line width of the first protruding portion.

In each row, it is desirable that a plurality of cross sections of the first protruding portions are aligned as much as possible along the radial direction or the direction parallel to the second direction. Therefore, within the row, it is desirable that the cross section of the first protruding portion in the innermost layer adjacent to the positive electrode or the negative electrode overlaps the cross section of the first protruding portion in the outermost layer adjacent to the positive electrode or the negative electrode. In this case, the overlapping width between the cross section of the first protruding portion in the innermost layer and that in the outermost layer is desirably half or more the line width of the first protruding portion, and may be 60% or more, or 70% or more of the line width.

It is desirable that, in the first direction of the longitudinal section, the intervals between the rows adjacent to each other are equal. Being "equal" refers to a case where, among a plurality of the intervals, the difference between the maximum interval and the minimum interval is 30% or less of the average of a plurality of the intervals. A plurality of rows, in the longitudinal section, may be arranged in a stripe shape at equal intervals. The average of a plurality of the intervals may be an average of the intervals measured at any positions in any five or more pairs of rows adjacent to each other.

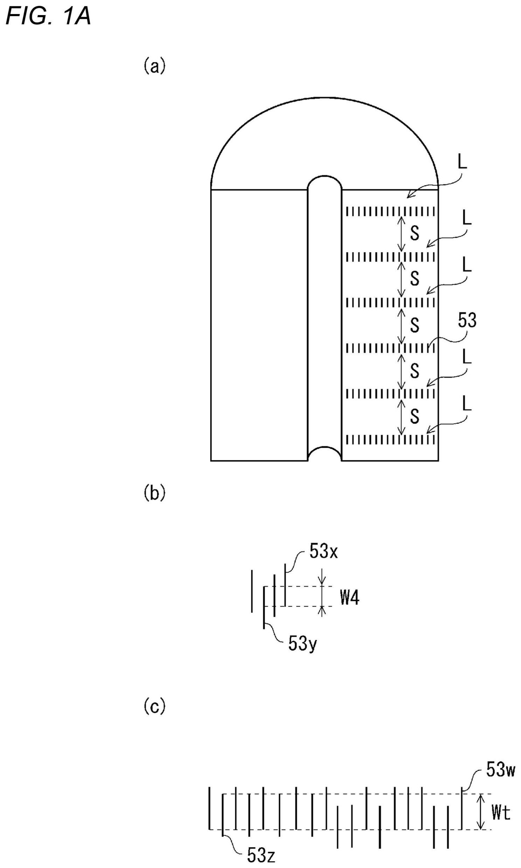

FIG. 1A(a) schematically illustrates a longitudinal section of an electrode group. A plurality of cross sections of first protruding portions 53 are aligned in the second direction (radial direction), forming a row (L). One row (L) is formed in the region from the winding axis (center) to the peripheral surface in the longitudinal section of the electrode group. In the longitudinal section of the electrode group, a plurality of rows (L) are observed at intervals (S) along the first direction.

In FIG. 1A(b), an overlapping width (W4) of the cross sections of the first protruding portions in any four consecutive layers is shown. The overlapping width W4 is determined as an overlapping width W4 of the cross sections of first protruding portions 53x and 53y in the two layers whose positions in the first direction deviate most from each other, of the cross sections of the first protruding portions in any four consecutive layers.

In FIG. 1A(c), an overlapping width (Wt) between the cross section of a first protruding portion 53z in the innermost layer adjacent to the positive electrode or the negative electrode and the cross section of a first protruding portion 53w in the outermost layer adjacent to the positive electrode or the negative electrode is shown. Note that, in the figure, the first protruding portion 53 on the innermost side is a protruding portion not adjacent to either the positive electrode or the negative electrode.

In the first direction of the longitudinal section of the electrode group, the intervals (S) between the rows (L) adjacent to each other are approximately equal. A plurality of rows are arranged in a stripe shape at equal intervals in the first direction.

The spacer layer may further have a linear second protruding portion having a second pattern different from the first pattern. It is desirable that the line width of the first protruding portion is different from the line width of the second protruding portion.

Here, the line width refers to the dimension in the direction that is perpendicular to the length direction of the first protruding portion or the second protruding portion each extending linearly and is parallel to the principal surfaces of the separator. The line width may be measured at any five or more points in each of the first protruding portion and the second protruding portion, to be calculated as an arithmetic average of the five or more measured values.

The thickness of the protruding portion refers to the maximum dimension in the direction that is perpendicular to the length direction of the first protruding portion or the second protruding portion each extending linearly and is parallel to the thickness direction of the separator. The thickness may be measured at any five or more points in each of the first protruding portion and the second protruding portion, to be calculated as an arithmetic average of the five or more measured values. The thickness of the protruding portion may be measured by photographing a cross section parallel to the thickness direction of the separator using a scanning electron microscope (SEM).

The spacer layer may be provided on a principal surface facing the negative electrode of the substrate layer, may be provided on a principal surface facing the positive electrode of the substrate layer, and may be provided on both principal surfaces. From the viewpoint of improving the charge-discharge efficiency or the cycle characteristics, it is desirable to provide the spacer layer on the principal surface facing the positive electrode of the substrate layer, and from the viewpoint of improving the battery safety, it is desirable to provide the spacer layer on the principal surface facing the negative electrode of the substrate layer.

The separator having the above configuration is hereinafter referred to as a "separator (A)". The lithium secondary battery having the above configuration is hereinafter referred to as a "lithium secondary battery (B)". The separator (A) is used in the lithium secondary battery (B).

### <Spacer layer>

In a lithium secondary battery, the major role of the spacer layer is to form a space in which lithium metal deposits. The lithium metal is accommodated in the space secured by the spacer layer, and thus, the expansion of the negative electrode during charging is suppressed.

However, by simply providing a spacer layer in the separator, it is difficult to secure a sufficient space for lithium to deposit. Moreover, the swelling of the electrode group fails to be sufficiently suppressed, and the capacity retention rate of the lithium secondary battery tends to decrease. For example, even though the spacer layer includes a linear first protruding portion having a first pattern, if in a longitudinal section of the wound electrode group, the cross sections of the first protruding portions adjacent to each other do not overlap each other at all, the function of the spacer layer as a spacer is halved. On the other hand, by controlling the arrangement of the linear first protruding portion, it is possible to allow the function of the spacer layer to be more significantly exhibited.

Specifically, in the longitudinal section of the electrode group, when a plurality of cross sections of the first protruding portions are aligned in the second direction, forming a row, the function of the spacer layer is enhanced, the function of securing a space for lithium to deposit is enhanced, the swelling of the electrode group is significantly suppressed, and the capacity retention rate of the lithium secondary battery is significantly improved.

Note that the spacer layer also plays a role of reinforcing the separator and suppressing the occurrence of wrinkles. By providing the spacer layer uniformly on the separator, the occurrence of wrinkles in the separator is significantly suppressed, which contributes to improving the efficiency of the manufacturing process. However, it is difficult to provide the spacer layer uniformly on the separator, when a plurality of cross sections of the first protruding portions are aligned in the second direction, forming a row, in the longitudinal section of the electrode group. In addition, such first protruding portions make the separator rigid in one direction, to generate anisotropy, which rather tends to cause wrinkles in the separator. Furthermore, when the surfaces of the electrodes and the separator are partially covered uniformly by the spacer layer, the internal resistance of the lithium secondary battery tends to increase.

On the other hand, a protruding portion (hereinafter referred to as a "second protruding portion") that serves to reinforce the separator may not necessarily have the same configuration as the first protruding portion for securing the space. That is, the spacer layer of the separator (A) may include a linear first protruding portion having a first pattern, and a linear second protruding portion having a second pattern different from the first pattern. The second protruding portion that serves to reinforce the separator may cover a smaller area of the separator.

A line width W1 of the first protruding portion and a line width W2 of the second protruding portion may be set different from each other. For example, in the first protruding portion, when the line width is set wider than that of the second protruding portion, the thickness is also increased accordingly. Therefore, the first protruding portion mainly contributes to the formation of the space. On the other hand, the second protruding portion, which has a narrower line width and is thin accordingly, mainly serves to reinforce the separator and prevent the occurrence of wrinkles.

As described above, from the viewpoint of ensuring a space for lithium to deposit, as well as of suppressing the occurrence of wrinkles in the separator, the spacer layer acts effectively which includes a linear first protruding portion having a first pattern and a linear second protruding portion having a second pattern and in which the line width of the first protruding portion and the line width of the second protruding portion are different from each other. By suppressing wrinkles, a desired space can be easily formed in the electrode group with reduced meandering of the first linear protruding portion, and the swelling of the electrode group is more significantly suppressed, leading to improved capacity retention rate of the lithium secondary battery.

The first pattern and the second pattern may be partially overlapped with each other. In other words, the first pattern and the second pattern may be superimposed on each other. In this case, the first protruding portion formed along the first pattern has intersecting points with the second protruding portion formed along the second pattern, and the first pattern and the second pattern are fused to each other. Such fusion alleviates the difference in stress between the protruding portion having a wide line width and a large thickness and the protruding portion having a narrow line width and a small thickness, and the anisotropy of the separator is reduced, and furthermore, the occurrence of wrinkles in the separator becomes more unlikely to occur.

In general, when the line width W1 of the linear first protruding portion having a first pattern is greater than the line width W2 of the linear second protruding portion having a second pattern (when W1>W2), a thickness T1 of the first protruding portion is greater than a thickness T2 of the second protruding portion. When W1>W2, in order to realize ensuring a space for lithium to deposit and reducing the occurrence of wrinkles in the separator in a balanced manner, it is desirable that the W1 is three times or more as large as the W2.

Likewise, when T1>T2, the thickness T1 of the first protruding portion may be three times or more as large as the thickness T2 of the second protruding portion.

A description will be given below on the preposition that W1>W2 and T1>T2.

In a longitudinal section of the electrode group, when a plurality of cross sections of the first protruding portions are aligned in the second direction, forming a row, it is desirable that the first protruding portion that satisfies W1>W2 have a plurality of linear protruding portions parallel to the second direction. The plurality of linear protruding portions parallel to the second direction which is the longitudinal direction of the separator, in the longitudinal section including the winding axis of the electrode group, are likely to overlap each other along the radial direction of the electrode group and likely to form a row. The first protruding portions can be formed, for example, in a continuous line shape or an intermittent line shape, in parallel to the second direction and at equal intervals. The first protruding portions can be arranged continuously or intermittently along a pattern of multiple stripes.

It is desirable that the first protruding portion has a rigidity that enables to form a firm space in the interior of the electrode group. It is desirable therefore that the line width of the first protruding portion is wide to some extent, and the thickness thereof is large.

The line width of the first protruding portion may be, for example, 100 µm or more and 2000 µm or less, and may be 200 µm or more and 1000 µm or less.

The thickness of the first protruding portion may be, for example, 10 µm or more and 100 µm or less, and may be 20 µm or more and 80 µm or less.

On a surface of the substrate layer, A regions facing the first protruding portion and B regions not facing the first protruding portion are present. The ratio by area of the A regions to the total of the A regions and the B regions may be, for example, 30% or less, may be 5 to 30%, and may be 5 to 20%. In this case, the internal resistance can be controlled within a smaller range.

It is desirable that the A regions facing the first protruding portion are arranged on the separator in a state of being uniform and dispersed as much as possible. This makes it possible to reduce the number of places where lithium metal can locally deposit while suppressing the increase in internal resistance, and makes it easier to restrict the amount of isolated lithium metal to be small as possible. Usually, the separator, the positive electrode, and the negative electrode have a belt-like shape with long and short sides. When the length (width) of the short side direction of the belt-like separator is denoted by L, and any circular region having a diameter of L/3 is set on the surface of the separator, it is desirable that the A regions and the B regions are co-present in such a circular region.

It is desirable that the second protruding portion includes protruding portions formed along the second pattern of a geometric design. When W1>W2, the second protruding portion mainly serves to reinforce the separator and prevent the occurrence of wrinkles. It is desirable that such protruding portions are arranged as evenly as possible with respect to the entire surface of the separator.

The geometric design may be a network-like design. That is, the second protruding portion may be disposed along the network-like pattern with respect to the entire surface of the separator. The network-like pattern may be an assembly of polygons. Examples of the network-like pattern include a shape in which polygons are combined so as to share sides. The polygons include triangles, squares, hexagons, and the like. Different kinds of polygons may be combined. The geometric design desirably has a small anisotropy, like an as an assembly of regular polygons. The geometric design may be, for example, a honeycomb design (an assembly of regular hexagons).

It is desirable that the second protruding portion has a narrowest possible line width and is thinnest as possible in thickness, so as not to obstruct the movement of lithium ions or nonaqueous electrolyte within the battery.

The line width of the second protruding portion may be, for example, 10 µm to 1000 µm, and may be 50 µm to 500 µm.

The thickness of the second protruding portion may be, for example, 1 µm to 50 µm, and may be 5 µm to 25 µm.

On a surface of the substrate layer, C regions facing the second protruding portion and D regions not facing the second protruding portion are present. The ratio by area of the C regions to the total of the C regions and the D regions may be, for example, 30% or less, may be 5 to 30%, and may be 5 to 20%. In this case, the internal resistance can be controlled within a smaller range.

It is desirable that the C regions facing the second protruding portion are arranged on the separator in a state of being uniform and dispersed as much as possible. This makes it possible to increase the effect of reinforcing the separator, and makes it easier to suppress the occurrence of wrinkles. When the length (width) of the short side direction of the belt-like separator is denoted by L, and any circular region having a diameter of L/3 or L/5 is set on the surface of the separator, it is desirable that the C regions and the D regions are co-present in such a circular region.

The first protruding portion and the second protruding portion may be formed respectively on one and the other principal surfaces of the substrate layer. Specifically, a first spacer layer including the first protruding portion may be provided on one principal surface of the substrate layer, and a second spacer layer including the second protruding portion may be provided on the other principal surface of the substrate layer. From the viewpoint of improving the charge-discharge efficiency or the cycle characteristics, it is desirable to provide the first spacer layer on the principal surface facing the positive electrode of the substrate layer, and from the viewpoint of improving the safety of the battery, it is desirable to provide the first spacer layer on the principal surface facing the negative electrode of the substrate layer.

The spacer layer may include a third protruding portion that is not linear. Such a third protruding portion may be shaped like dots arranged in a predetermined pattern. The spacer layer may be composed only of a linear protruding portion, or may be composed of a linear protruding portion and a dot-like protruding portion. The planar shape of the dot-like protruding portion is not particularly limited, and may be circular (perfect circle or ellipse), polygonal (triangular, rectangular, etc.), and the like.

The spacer layer may be formed by, for example, applying a dispersion liquid containing a spacer material onto a surface of the substrate layer, followed by drying. In this case, the first protruding portion and the second protruding portion included in the spacer layer can be bonded to the substrate layer with sufficient strength.

The dispersion liquid containing a spacer material contains, for example, insulating particles, a binder resin, and a thickener. Accordingly, the spacer formed from the dispersion liquid contains insulating particles, a binder resin, and a thickener. The dispersion medium of the dispersion liquid may be, although not particularly limited to, for example, water, an organic solvent, or a mixture of water and an organic solvent. As the organic solvent, for example, N-methyl-2-pyrrolidone (NMP) can be used. In particular, it is desirable to use water in terms of reducing the environmental load.

The shape of the insulating particles may be, although not particularly limited to, spherical. Note that the "spherical" does not mean a strictly perfect spherical shape, but means a shape without sharp corners and having an aspect ratio (a maximum diameter / a maximum diameter in the direction perpendicular to the maximum diameter) in the range of, for example, 1 to 3. The median diameter (i.e., average particle diameter) in a volume-based particle size distribution of the insulating particles may be 1.0 µm to 10 µm. The median diameter is a particle diameter at 50% cumulative volume. The median diameter of the insulating particles may be 1.0 µm to 2 µm. When the median diameter is within the above range, the insulating particles in the dispersion liquid is likely to stably maintain their dispersed state, and the dispersed state is maintained even after application to the substrate layer, and thus, a spacer layer with a homogeneous morphology is likely to be formed.

The median diameter in a volume-based particle size distribution of the particles can be measured, for example, with a laser diffraction-scattering type particle size distribution analyzer (e.g., Microtrac available from Nikkiso Co., Ltd.). Alternatively, a cross section of the spacer may be observed with a transmission electron microscope (TEM), to obtain a TEM image, and, with respect to randomly selected 100 insulating particles, calculate an area surrounded by the contour of each particle, and calculate a diameter of an equivalent circle (perfect circle) having the same area as the calculated area, to determine the median diameter as an average value of the diameters of the 100 equivalent circles.

The volume resistivity of the insulating particles may be, for example, 1.0 × 10⁸ Ω·cm or more. When the insulating particles have sufficient insulation properties, almost no lithium metal will deposit on the spacer, and the deposition of lithium metal in the intended space is facilitated. The volume resistivity of the insulating particles may be even greater, for example, 1.0 × 10¹⁰ Ω·cm or more.

The volume resistivity can be measured by a four-probe method. For example, measurement may be performed, under application of a pressure of 204 Kgf/cm² to the insulating particle, with a powder resistivity meter (e.g., Loresta SP, available from Nitto Seiko Analytech Co., Ltd.).

The insulating particles may be inorganic particles, such as those of a metal oxide, a metal hydroxide, a metal nitride, a metal carbide, and a metal sulfide. Examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals, such as aluminosilicate, layered silicate, barium titanate, and strontium titanate, may also be used. In particular, preferred are alumina, silica, titania, and the like.

The content of the insulating particles in the spacer layer is, for example, less than 80 vol%, and desirably 50 to 70 vol%. The content (volume ratio) of the insulating particles in the spacer may be determined by observing a cross section of the spacer layer with a transmission electron microscope (TEM), to obtain a TEM image, and calculate a total area surrounded by the contours of the insulating particles in any 10 µm² field of view, to determine the volume ratio as a ratio of the calculated total area to the area of the field of view. In this case, it is desirable to determine the volume ratios in three or more fields of view, and calculate an average value thereof.

The binder resin may be, for example, a fluorocarbon resin, a fluorocarbon rubber, a styrene-butadiene copolymer or a hydrogenated product thereof, an acrylonitrile-butadiene copolymer or a hydrogenated product thereof, a methacrylic acid ester-acrylic acid ester copolymer, a styrene-acrylic acid ester copolymer, an acrylonitrile-acrylic acid ester copolymer, an ethylene propylene rubber, a polyphenylene ether, a polysulfone, a polyethersulfone, a polyphenylene sulfide, a polyether imide, a polyimide, a polyamide such as a wholly-aromatic polyamide (aramid), a polyimide, a polyamide imide, a polyacrylonitrile, a polyether, a polyolefin, and the like.

The amount of the binder resin, for example, may be 20 to 80 parts by volume, may be 20 to 70 parts by volume, may be 20 to 50 parts by volume, and may be 25 to 40 parts by volume, per 100 parts by volume of the insulating particles. Within this range, the mechanical strength of the spacer layer can be easily enhanced, and the bonding strength between the substrate layer and the spacer layer is likely to be enhanced.

The thickener may include, for example, at least one selected from the group consisting of carboxymethyl cellulose and a carboxymethyl cellulose salt (hereinafter, at least one selected from the group consisting of carboxymethyl cellulose and a carboxymethyl cellulose salt is sometimes referred to as "CMC"). When a carboxymethyl cellulose salt is used as the CMC, a sodium salt, a lithium salt, a potassium salt, an ammonium salt, and the like can be used. In particular, the carboxymethyl cellulose salt desirably includes a sodium salt.

To fully utilize the role of the CMC, it is desirable that the dispersion medium of the dispersion liquid of the spacer material contains water. Specifically, 50 mass% or more of the dispersion medium may be water, and 70 mass% or more, 80 mass% or more, or 90 mass% or more of the dispersion medium may be water.

The amount of the CMC, for example, may be 0.5 to 5 parts by volume, and may be 1 to 3 parts by volume, per 100 parts by volume of insulating particles. By using the CMC within this range, it is possible to allow the CMC to exert its sufficient thickening effect.

### <Substrate layer>

For the substrate layer, a porous sheet having ion permeability and electrically insulating properties is used. Examples of the porous sheet include a microporous thin film, a woven fabric, and a nonwoven fabric. The material of the porous sheet is not particularly limited, and may be a polymer material. Examples of the polymer material include an olefin resin, a polyamide resin, and cellulose. Examples of the olefin resin include polyethylene, polypropylene, and a copolymer of ethylene and propylene. The substrate layer may contain an additive, as necessary. Examples of the additive include an inorganic filler.

The thickness of the substrate layer is, although not particularly limited to, for example, 5 µm or more and 20 µm or less, and more preferably 10 µm to 20 µm.

The substrate layer may include a porous sheet and a composite material layer. The composite material layer may be formed on one principal surface of the porous sheet, and may be formed on both principal surfaces thereof. The composite material layer is a layer that is permeable to lithium ions. The thickness of the composite material layer may be 5% to 50% of the overall thickness of the separator.

The composite material layer includes a resin material and inorganic particles. The inorganic particles may include first particles and/or second particles. The first particles are lithium-containing particles of a phosphoric acid salt. The first particles have an effect of suppressing the heat generation in the battery during abnormality. The second particles are particles other than the first particles.

When the composite material layer is formed on only one principal surface of the porous sheet, it is desirable to provide the composite material layer on a principal surface facing the positive electrode of the porous sheet. By arranging the composite material layer on the positive electrode side, the deterioration of the porous sheet due to oxidation reactions can be suppressed. On the other hand, by arranging the composite material layer on the negative electrode side, the deterioration of the porous sheet due to reduction reactions can be suppressed.

The phosphoric acid salt constituting the first particles may be at least one selected from the group consisting of lithium phosphate (Li₃PO₄), dilithium hydrogen phosphate (Li₂HPO₄), and lithium dihydrogen phosphate (LiH₂PO₄). Among these, lithium phosphate is preferred because it is highly effective in suppressing the heat generation in the battery during abnormality. The median diameter in a volume-based particle size distribution of the first particles may be 0.1 µm to 1.0 µm.

A preferred example of the second particles is particles constituted of an insulating inorganic compound that does not melt or decompose in the event of abnormal heat generation in the battery. Examples of the material of the second particles include an oxide, a hydroxide, a nitride, a carbide, and a sulfide. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide and boron carbide. Examples of the sulfide include barium sulfate. Examples of the hydroxide include aluminum hydroxide. The median diameter in a volume-based particle size distribution of the second particles may be 0.2 to 2.0 µm.

The median diameter in a volume-based particle size distribution of the particles can be measured, for example, with a laser diffraction-scattering type particle size distribution analyzer (e.g., Microtrac available from Nikkiso Co., Ltd.). Alternatively, a cross section of the substrate layer may be observed with a transmission electron microscope (TEM), to obtain a TEM image, and, with respect to randomly selected 100 first or second particles, calculate an area surrounded by the contour of each particle, and calculate a diameter of an equivalent circle (perfect circle) having the same area as the calculated area, to determine the median diameter as an average value of the diameters of the 100 equivalent circles.

For the resin material, it is desirable to use a polymer material having higher heat resistance than the material of the porous sheet. Such a polymer material preferably includes at least one selected from the group consisting of an aromatic polyamide, an aromatic polyimide, and an aromatic polyamide imide. These are known as polymer materials with high heat resistance. From the viewpoint of heat resistance, preferred is an aramid, i.e., a meta-aramid (meta-type wholly-aromatic polyamide) and a para-aramid (para-type wholly-aromatic polyamide).

The content of the inorganic particles in the composite material layer may be in the range of 50 mass% to 99 mass% (e.g., in the range of 85 mass% to 99 mass%).

### (Negative electrode)

The negative electrode includes a negative electrode current collector. In a lithium secondary battery, lithium metal deposits on the surface of the negative electrode during charging. Specifically, lithium ions contained in the nonaqueous electrolyte receive electrons on the negative electrode during charging, to be lithium metal, which deposits on the surface of the negative electrode. The lithium metal deposited on the surface of the negative electrode dissolves as lithium ions in the nonaqueous electrolyte during discharging.

The negative electrode may include a lithium ion storage layer (a layer that develops capacity by absorbing and releasing lithium ions into and from the negative electrode active material such as graphite) supported on the negative electrode current collector. In this case, the open circuit potential of the negative electrode at full charge may be 70 mV or less relative to lithium metal (lithium dissolution/deposition potential). When the open circuit potential of the negative electrode at full charge is 70 mV or less relative to lithium metal, lithium metal is present on the surface of the lithium ion storage layer at full charge. That is, the negative electrode develops capacity through deposition and dissolution of lithium metal.

Here, "at full charge" means a state in which the battery is charged to, for example, a charged state of 0.98 × C or more, where C is the rated capacity of the battery. The open-circuit potential of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The lithium ion storage layer is a layer of a negative electrode mixture containing a negative electrode active material. The negative electrode mixture may contain, in addition to the negative electrode active material, a binder, a thickener, a conductive agent, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), non-graphitizable carbon (hard carbon), and the like can be used.

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene and polyvinylidene fluoride.

The negative electrode current collector may be a conductive sheet. As the conductive sheet, a foil, a film, and like are used.

The material of the negative electrode current collector (conductive sheet) may be a conductive material other than lithium metal and lithium alloy. The conductive material may be a metal material, such as a metal and an alloy. The conductive material is preferably a material that does not react with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, or graphite having a basal plane predominately exposed on its surface. Examples of the alloy include copper alloy and stainless steel (SUS). In particular, copper and/or copper alloy that have high electrical conductivity are preferred.

The thickness of the negative electrode current collector is not particularly limited, and is, for example, 5 µm or more and 300 µm or less.

### (Positive electrode)

The positive electrode includes, for example, a positive electrode current collector, and a positive electrode mixture layer supported by the positive electrode current collector. The positive electrode mixture layer contains, for example, a positive electrode active material, a conductive material, and a binder. The positive electrode mixture layer may be formed on only one surface or on both surfaces of the positive electrode current collector. The positive electrode can be obtained by, for example, applying a positive electrode mixture slurry containing a positive electrode active material, a conductive material, and a binder, onto both surfaces of the positive electrode current collector, and drying the applied films, followed by rolling.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released in the form of lithium ions from the positive electrode during charging, and deposits in the form of lithium metal on the negative electrode or the negative electrode current collector. During discharging, the lithium metal dissolves from the negative electrode to release lithium ions, which are absorbed into the composite oxide of the positive electrode. That is, lithium ions involved in charging and discharging are mostly derived from the solute in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Co, Ni, and/or Mn. The lithium-containing transition metal oxide can contain one or more kinds of typical elements, as necessary. Examples of the typical element include Mg, Al, Ca, Zn, Ga, Ge, Sn, Sb, Pb, and Bi. The typical element may be Al, and the like.

Among the lithium-containing transition metal oxides, a composite oxide containing Co, Ni and/or Mn as transition metal elements and optionally containing Al, and having a layered rock-salt type crystal structure is preferred for achieving high capacity. In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder, the conductive agent, and the like, for example, those exemplified for the negative electrode can be used. The shape and the thickness of the positive electrode current collector can be selected from the shape and the range of the positive electrode current collector.

Examples of the material of the positive electrode current collector (conductive sheet) include a metal material containing Al, Ti, Fe, or the like. The metal material may be Al, Al alloy, Ti, Ti alloy, Fe alloy, and the like. The Fe alloy may be stainless steel (SUS).

The thickness of the positive electrode current collector is, although not particularly limited to, for example, 5 µm or more and 300 µm or less.

### (Nonaqueous electrolyte)

The nonaqueous electrolyte having lithium ion conductivity may be a liquid electrolyte (electrolyte solution), may be a gel electrolyte, and may be a solid electrolyte. The liquid electrolyte is, for example, an electrolyte solution containing a nonaqueous solvent and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs a nonaqueous solvent and turns into a gel is used. Examples of the polymer material include a fluorocarbon resin, an acrylic resin, a polyether resin, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by dissolving a lithium salt in a nonaqueous solvent. When the lithium salt dissolves in the nonaqueous solvent, lithium ions and anions are produced.

As the anions, BF₄⁻, ClO₄⁻, PF₆⁻, CF₃SO₃⁻, CF₃CO₂⁻, imide anions, an oxalate complex anion, and the like can be used. Examples of the imide anions include N(SO₂CF₃)₂⁻, and N(CₘF₂ₘ₊₁SO₂)ₓ(CₙF₂ₙ₊₁SO₂)_{y}⁻, where m and n are each independently an integer of 0 or 1 or more, x and y are each independently 0, 1, or 2, and satisfy x+y = 2. The oxalate complex anion may contain boron and/or phosphorus. Examples of the oxalate complex anion include bis(oxalato)borate anion, difluoro(oxalato)borate anion (BF₂(C₂O₄)⁻), PF₄(C₂O₄)⁻, and PF₂(C₂O₄)₂⁻. The nonaqueous electrolyte may contain these anions singly or in combination of two or more kinds.

From the viewpoint of suppressing dendritic deposition of lithium metal, the nonaqueous electrolyte preferably contains at least an oxalate complex anion, and in particular, it is desirable to contain an oxalate complex anion having fluorine. The oxalate complex anion having fluorine interacts with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions.

The nonaqueous solvent may be, for example, an ester, an ether, a nitrile, an amide, and halogen-substituted derivatives thereof. The nonaqueous electrolyte may include these nonaqueous solvents singly or in combination of two or more kinds. Examples of the halogen-substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the nonaqueous electrolyte is, for example, 0.5 mol/L or more and 3.5 mol/L or less. The anion concentration in the nonaqueous electrolyte may be set to 0.5 mol/L or more and 3.5 mol/L or less. The oxalate complex anion concentration in the nonaqueous electrolyte may be set to 0.05 mol/L or more and 1 mol/L or less.

The nonaqueous electrolyte may contain an additive. The additive may form a surface film on the negative electrode. When a surface film derived from the additive is formed on the negative electrode, the dendrite formation and growth can be easily suppressed. Examples of such an additive include vinylene carbonate, FEC, and vinyl ethyl carbonate (VEC).

A description will be given below with reference to the drawings. To the components of the below-described lithium secondary battery (B), the components as described above can be applied. The below-described components can be modified based on the description above. In the below-described lithium secondary battery, the components which are not essential to the lithium secondary battery according to the present disclosure may be omitted. In the drawings referred to below, the scale of the components is changed to facilitate understanding.

### (Embodiment 1)

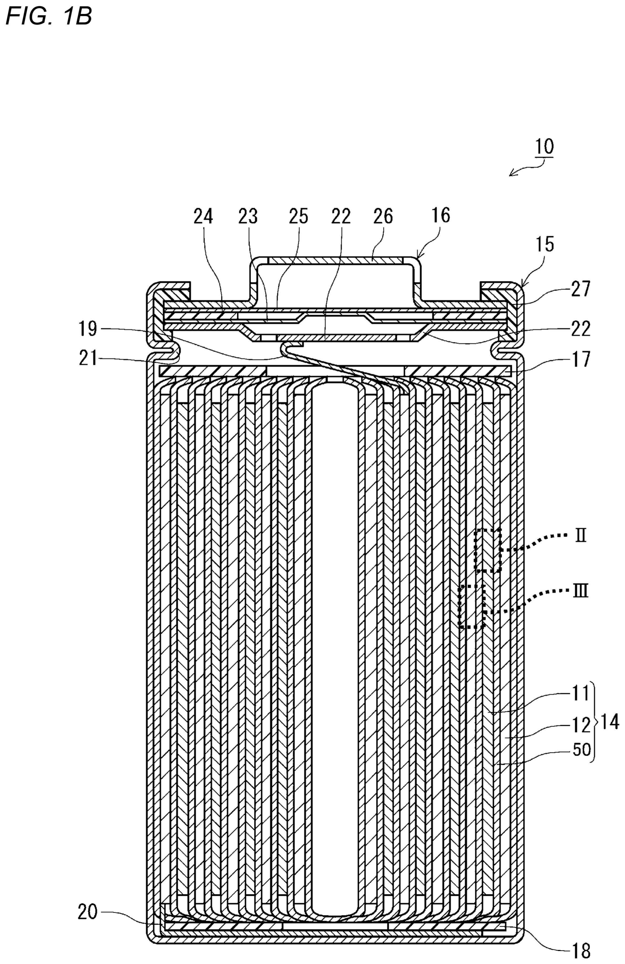

FIG. 1B is a schematic longitudinal sectional view of an example of a lithium secondary battery according to Embodiment 1. In FIG. 1B, the spacer layer and the space formed by the spacer layer are not shown. A cylindrical lithium secondary battery 10 illustrated in FIG. 1B includes a cylindrical battery case, and a wound electrode group 14 and a nonaqueous electrolyte (not shown) housed in the battery case. FIG. 1B corresponds to a longitudinal section including the winding axis of the electrode group 14. The battery case includes a case main body 15, which is a cylindrical metal container with a bottom, and a sealing body 16 sealing the opening of the case main body 15. A gasket 27 is disposed between the case main body 15 and the sealing body 16. The gasket 27 ensures the hermeticity of the battery case. In the case main body 15, insulating plates 17 and 18 are respectively disposed at both ends of the electrode group 14 in the winding axis direction (first direction).

The case main body 15 has a step portion 21 formed by, for example, partially pressing the sidewall of the case main body 15 from the outside. The step portion 21 may be formed, on the sidewall of the case main body 15, in an annular shape along the circumferential direction of the case main body 15. The sealing body 16 is supported on the opening-side surface of the step portion 21.

The sealing body 16 includes a filter 22, a lower valve body 23, an electrically insulating member 24, an upper valve body 25, and a cap 26. In the sealing body 16, these members are stacked in this order. The sealing body 16 is attached at the opening of the case main body 15 so that the cap 26 is positioned outside the case main body 15 and the filter 22 is positioned inside the case main body 15. Each of the above members constituting the sealing body 16 is, for example, disk-shaped or ring-shaped. The lower valve body 23 and the upper valve body 25 are connected to each other at their respective centers, and an insulating member 24 is interposed between the respective peripheral portions. The filter 22 and the lower valve body 23 are connected to each other at their respective peripheral portions. The upper valve body 25 and the cap 26 are connected to each other at their respective peripheral portions. In other words, the members except the insulating member 24 are electrically connected to each other.

The lower valve body 23 has a vent hole (not shown). Therefore, when the internal pressure of the battery case rises due to abnormal heat generation or other events, the upper valve body 25 bulges toward the cap 26 and spaced away from the lower valve body 23. This breaks the electrical connection between the lower valve body 23 and the upper valve body 25. When the internal pressure further rises, the upper valve body 25 ruptures, to let the gas escape though an aperture formed in the cap 26.

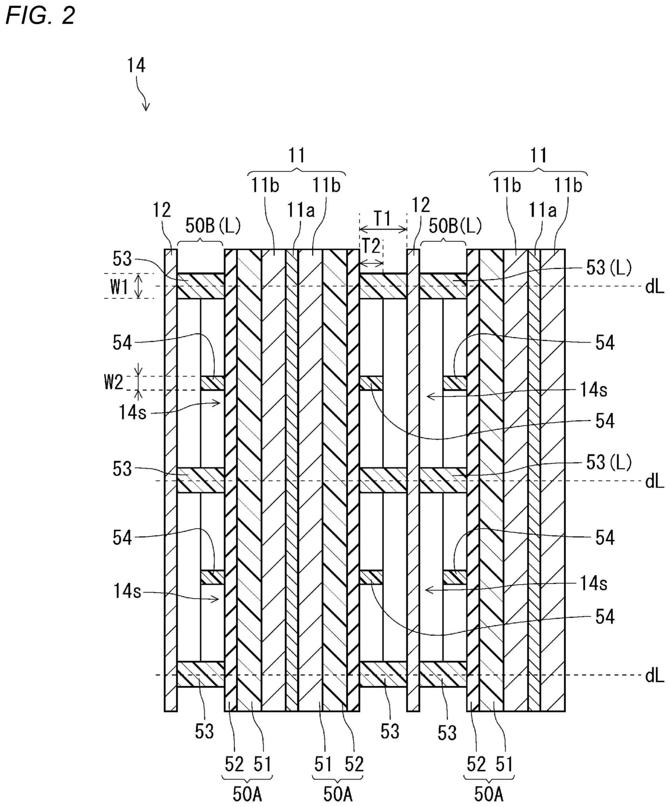

FIG. 2 is a schematic partial sectional view of the lithium secondary battery of FIG. 1B. FIG. 2 is a partially enlarged view of a longitudinal section including the winding axis of the electrode group 14. FIG. 2 includes a part in the vicinity of the positive electrode surrounded by a region II in FIG. 1 and a part in the vicinity of the negative electrode surrounded by a region III in FIG. 1. In FIG. 2, a row (L) formed by a plurality of cross sections of the first protruding portions 53 aligned in the second direction is partially shown.

The electrode group 14 includes a positive electrode 11, a negative electrode 12, and a separator 50. The separator 50 has a substrate layer 50A and a spacer layer 50B. The positive electrode 11, the negative electrode 12, and the separator 50 all have a belt-like shape. The positive electrode 11, the negative electrode 12, and the separator 50 are wound together such that the separator 50 is disposed between the positive electrode 11 and the negative electrode 12, into an electrode group 14 having a plurality of turns.

The positive electrode 11 includes a positive electrode current collector 11a, and a positive electrode mixture layer 11b formed on each of both surfaces thereof. The positive electrode current collector 11a is electrically connected, via a positive electrode lead 19, to the cap 26 that functions as a positive electrode terminal.

In FIG. 2, as the negative electrode 12, a negative electrode (negative electrode current collector) without lithium metal deposited thereon is illustrated. The negative electrode 12 is electrically connected, via a negative electrode lead 20, to the case main body 15 that functions as a negative electrode terminal.

Here, the substrate layer 50A includes a porous sheet 51 and a composite material layer 52. The composite material layer 52 is formed, of two principal surfaces of the porous sheet 51, on the principal surface facing the negative electrode 12. The spacer layer 50B is formed on the composite material layer 52 of the substrate layer 50A, and is in contact with the negative electrode 12. The spacer layer 50B forms a space 14s between the positive electrode 11 and the negative electrode 12 (between the negative electrode 12 and the substrate layer 50A). The presence of the space 14s alleviates the volume change of the electrode group 14 associated with deposition of lithium metal during charging, leading to improved cycle characteristics.

The spacer layer 50B includes a first protruding portion 53 and a second protruding portion 54. The line width of the first protruding portion 53 is approximately twice as large as the line width of the second protruding portion 54, and the thickness of the first protruding portion 53 is approximately twice as large as the thickness of the second protruding portion 54. In FIG. 2, the line width W1 and the thickness T1 of the first protruding portion 53, and the line width W2 and the thickness T2 of the second protruding portion 54 are shown. The space 14s is secured by the first protruding portion 53.

In FIG. 2, W1>W2 and T1>T2 are satisfied. If the first protruding portion 53 having a line width W1 is uniformly provided on the separator 50, most of the surfaces of the negative electrode 12 and the separator 50 (substrate layer 50A) are uniformly covered with the first protruding portion 53, which tends to increase the internal resistance of the lithium secondary battery. On the other hand, when the second protruding portion 54, which plays a role of reinforcing the separator 50, is provided so as to have a narrower line width W2 than the first protruding portion 53, it is possible to suppress the occurrence of wrinkles in the separator while suppressing the increase in internal resistance. As a result, a desired space can be easily formed in the electrode group with reduced meandering of the first protruding portion, and the swelling of the electrode group is significantly suppressed, leading to improved capacity retention rate of the lithium secondary battery.

In a longitudinal section including the winding axis of the electrode group 14, the first protruding portions 53 are arranged so as to overlap each other along the radial direction of the electrode group 14. In other words, the first protruding portions 53 arranged in a plurality of turns overlap each other along the radial direction of the electrode group 14 (along a dashed line dL in FIG. 2), forming a row. This ensures the space 14s to be the maximum possible, in the interior of the electrode group 14. Such a row can be easily formed by, for example, providing the first protruding portion 53 in a pattern of multiple stripes arranged at equal intervals in parallel to the second direction perpendicular to the winding axis direction (first direction).

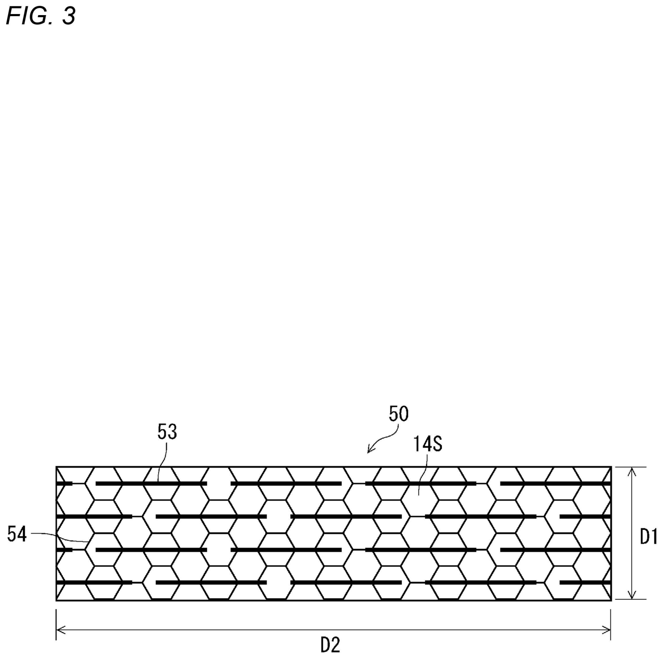

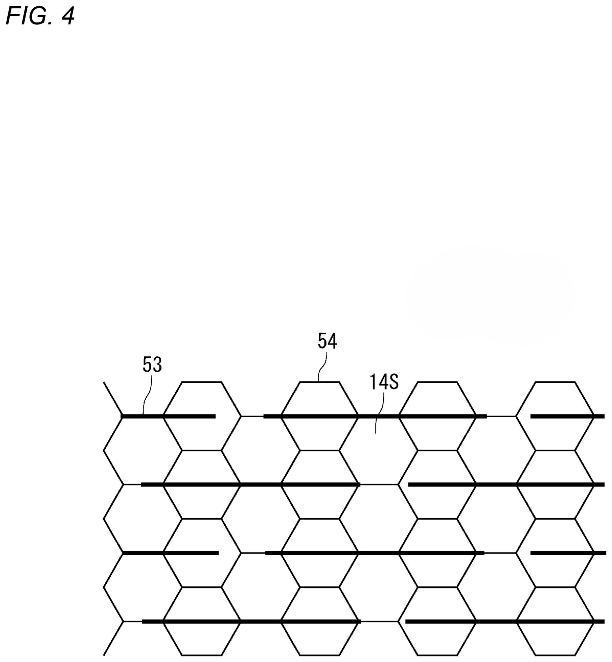

FIG. 3 is a plan view of the spacer layer 50B as viewed from the direction normal to the separator 50, and FIG. 4 is a partial enlarged view of FIG. 3. The partial section of the separator 50 that can be seen in the longitudinal section of FIG. 2 corresponds to a cross section taken along a line II-II in FIG. 4.

The linear first protruding portion 53 has an intermittent pattern (first pattern) of multiple stripes extending parallel to the second direction, which are formed so as to have equal intervals therebetween in the first direction. On the other hand, the linear second protruding portion 54 is formed along a pattern (second pattern) of honeycomb design. The pattern of honeycomb design is a pattern in which a plurality of hexagons are arranged so as to share sides with each other. Since the first pattern and the second pattern are partially overlapped with each other, there are a plurality of intersecting points where the first protruding portion 53 and the second protruding portion 54 intersect with each other. By fusing the first pattern and the second pattern (i.e., the first protruding portion 53 and the second protruding portion 54) in this way, the stress that occurs by the first protruding portion 53 having a wide line width and a large thickness is relaxed, and the occurrence of wrinkles in the separator can be remarkably suppressed.

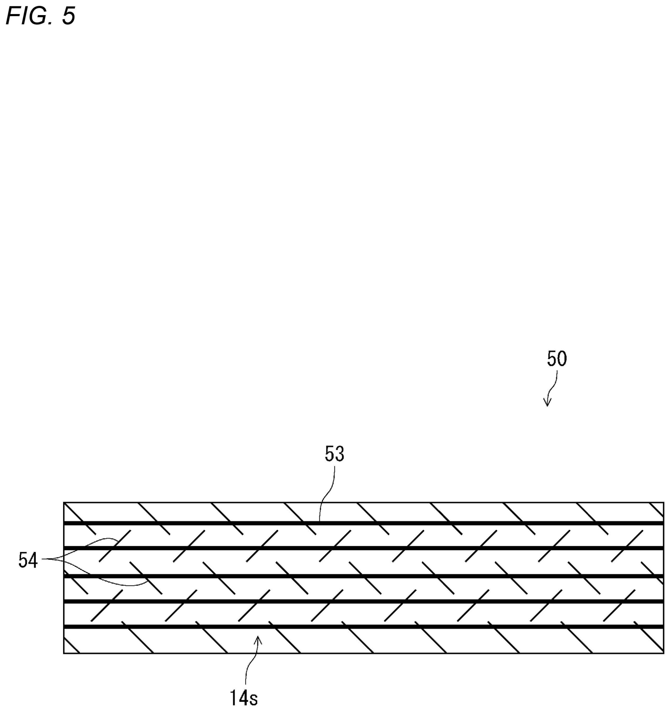

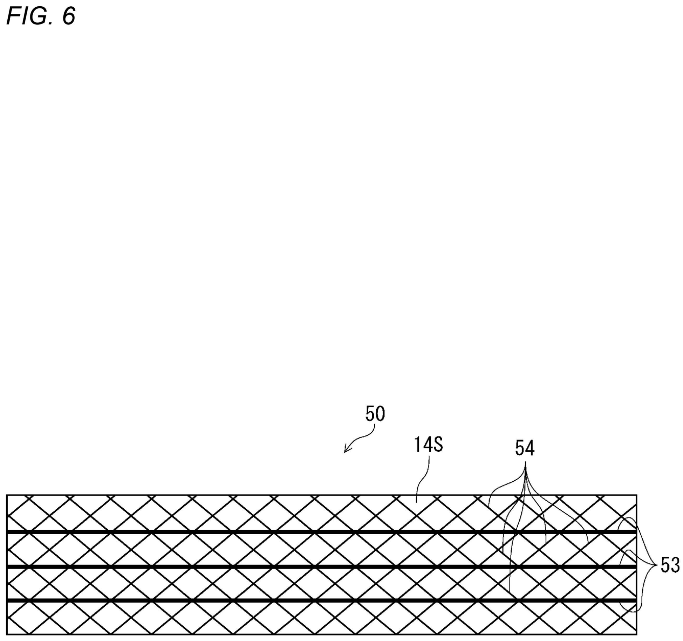

FIGS. 5 and 6 are plan views of other examples of the spacer layer 50B, as viewed from the direction normal to the separator 50. The spacer layer 50B in each of FIGS. 5 and 6 has a continuous pattern (first pattern) of multiple stripes extending parallel to the second direction, which are formed so as to have equal intervals therebetween in the first direction. On the other hand, the pattern (second pattern) of the second protruding portion 54 included in the spacer layer 50B in FIG. 5 is not network-like, and a plurality of the second protruding portions 54 are spaced apart from each other, and adjacent second protruding portions intersect with each other. The pattern (second pattern) of the second protruding portion 54 included in the spacer layer 50B in FIG. 6 is network-like, which is a lattice pattern in which multiple rhombuses are arranged so as to share sides with each other. In FIGS. 5 and 6, too, the first pattern and the second pattern are also partially overlapped with each other, and there are a plurality of intersecting points where the first protruding portion 53 and the second protruding portion 54 intersect with each other.

In the above embodiment, a cylindrical lithium secondary battery including a wound electrode group is described. However, the lithium secondary battery of the present embodiment is not limited to the form of Embodiment 1, and is applicable also to other forms. The shape of the lithium secondary battery can be selected as appropriate from various shapes, such as cylindrical, prismatic, sheet-like, and flat shapes, depending on its use.

### (Supplementary notes)

The above description of embodiments discloses the following techniques.

### (Technique 1)

A lithium secondary battery, comprising:
a positive electrode, a negative electrode, a separator disposed between the positive electrode and the negative electrode, and a nonaqueous electrolyte, wherein
the positive electrode and the negative electrode are wound with the separator interposed between the positive electrode and the negative electrode, to constitute an electrode group having a plurality of turns,
at the negative electrode, lithium metal deposits during charging, and the lithium metal dissolves during discharging,
the separator has an elongated shape having a length D1 in a first direction parallel to a winding axis of the electrode group, and a length D2 in a second direction perpendicular to the first direction, where D1 < D2,
the separator has a substrate layer, and a spacer layer,
the spacer layer includes a linear first protruding portion having a first pattern, and
in a longitudinal section including the winding axis of the electrode group, a plurality of cross sections of the first protruding portions are aligned in a radial direction of the longitudinal section, forming a row.

### (Technique 2)

The lithium secondary battery according to technique 1, wherein, in the radial direction of the longitudinal section, overlapping widths of any 10 pairs of cross sections of the first protruding portions adjacent to each other are half or more a line width of the first protruding portion.

### (Technique 3)

The lithium secondary battery according to technique 1 or 2, wherein, within the row, an average overlapping width of cross sections of the first protruding portions adjacent to each other is half or more a line width of the first protruding portion.

### (Technique 4)

The lithium secondary battery according to any one of techniques 1 to 3, wherein, within the row, all of overlapping widths of cross sections of the first protruding portions in any four consecutive layers are half or more a line width of the first protruding portion.

### (Technique 5)

The lithium secondary battery according to any one of techniques 1 to 4, wherein, within the row, a cross section of the first protruding portion in an innermost layer adjacent to the positive electrode or the negative electrode overlaps a cross section of the first protruding portion in an outermost layer adjacent to the positive electrode or the negative electrode.

### (Technique 6)

The lithium secondary battery according to any one of techniques 1 to 5, wherein, in the first direction of the longitudinal section, intervals between the rows adjacent to each other are equal.

### (Technique 7)

The lithium secondary battery according to any one of techniques 1 to 6, wherein the spacer layer includes a linear second protruding portion having a second pattern different from the first pattern.

### (Technique 8)

The lithium secondary battery according to technique 7, wherein the first pattern and the second pattern are partially overlapped with each other.

### (Technique 9)

The lithium secondary battery according to technique 7 or 8, wherein a thickness T1 of the first protruding portion is larger than a thickness T2 of the second protruding portion.

### (Technique 10)

The lithium secondary battery according to technique 9, wherein the thickness T1 of the first protruding portion is three times or more as large as the thickness T2 of the second protruding portion.

### (Technique 11)

The lithium secondary battery according to any one of techniques 1 to 10, wherein the first protruding portion has a plurality of linear protruding portions parallel to the second direction.

### (Technique 12)

The lithium secondary battery according to any one of techniques 7 to 11, wherein the second protruding portion is a protruding portion formed along the second pattern of a geometric design.

### (Technique 13)

The lithium secondary battery according to technique 12, wherein the geometric design is a honeycomb design.

### (Technique 14)

The lithium secondary battery according to any one of techniques 7 to 13, wherein the first protruding portion and the second protruding portion are formed respectively on one and the other principal surfaces of the substrate layer.

### (Technique 15)

A separator which has an elongated shape having a length D1 in a first direction and a length D2 in a second direction perpendicular to the first direction, where D1<D2, comprising:
a substrate layer, and a spacer layer, wherein
the spacer layer includes a linear first protruding portion having a first pattern, and
when a positive electrode and a negative electrode are wound with the separator interposed between the positive electrode and the negative electrode, to constitute an electrode group having a plurality of turns, the electrode group having a winding axis parallel to the first direction,
in a longitudinal section including the winding axis of the electrode group, a plurality of cross sections of the first protruding portions are aligned in a radial direction of the longitudinal section, forming a row.

### (Technique 16)

The separator according to technique 15, wherein, in the radial direction of the longitudinal section, overlapping widths of any 10 pairs of cross sections of the first protruding portions adjacent to each other are half or more a line width of the first protruding portion.

### (Technique 17)

The lithium secondary battery according to technique 15 or 16, wherein, within the row, an average overlapping width of cross sections of first protruding portion adjacent to each other is half or more a line width of the first protruding portion.

### (Technique 18)

The lithium secondary battery according to any one of techniques 15 to 17, wherein, within the row, all of overlapping widths of cross sections of the first protruding portions in any four consecutive layers are half or more a line width of the first protruding portion.

### (Technique 19)

The separator according to any one of techniques 15 to 18, wherein within the row, a cross section of the first protruding portion in an innermost layer adjacent to the positive electrode or the negative electrode overlaps a cross section of the first protruding portion in an outermost layer adjacent to the positive electrode or the negative electrode.

### (Technique 20)

The separator according to any one of techniques 15 to 19, wherein, in the first direction of the longitudinal section, intervals between the rows adjacent to each other are equal.

### (Technique 21)

The separator according to any one of techniques 15 to 20, wherein the spacer layer includes a linear second protruding portion having a second pattern different from the first pattern.

### (Technique 22)

The separator according to technique 21, wherein the first pattern and the second pattern are partially overlapped with each other.

### (Technique 23)

The separator according to technique 21 or 22, wherein a thickness T1 of the first protruding portion is larger than a thickness T2 of the second protruding portion.

### (Technique 24)

The separator according to technique 23, wherein the thickness T1 of the first protruding portion is three times or more as large as the thickness T2 of the second protruding portion.

### (Technique 25)

The separator according to any one of techniques 15 to 24, wherein the first protruding portion has a plurality of linear protruding portions parallel to the second direction.

### (Technique 26)

The separator according to any one of techniques 21 to 25, wherein the second protruding portion is a protruding portion formed along the second pattern of a geometric design.

### (Technique 27)

The separator according to technique 26, wherein the geometric design is a honeycomb design.

### (Technique 28)

The separator according to any one of techniques 21 to 27, wherein the first protruding portion and the second protruding portion are formed respectively on one and the other principal surfaces of the substrate layer.

### [Examples]

The lithium secondary battery according to the present embodiment will be specifically described below with reference to Examples and Comparative Examples. The present disclosure, however, is not limited to the following Examples.

### <<Example 1>>

### (1) Production of positive electrode

A layered rock-salt type lithium-containing transition metal oxide (NCA: positive electrode active material) containing Li, Ni, Co, and Al (the molar ratio of Li to the total of Ni, Co, and Al is 1.0), acetylene black (AB; conductive material), and polyvinylidene fluoride (PVdF; binder) were mixed in a mass ratio of NCA:AB:PVdF = 95:2.5:2.5, to which an appropriate amount of N-methyl-2-pyrrolidone (NMP) was further added, and stirred together, to prepare a positive electrode mixture slurry. The resultant positive electrode mixture slurry was applied onto both surfaces of a belt-like Al foil (positive electrode current collector), then dried, and the applied films of the positive electrode mixture were rolled using a roller. Lastly, the obtained laminate of the positive electrode current collector and the positive electrode mixture was cut in a predetermined electrode size, to obtain a positive electrode having a positive electrode mixture layer on each of both surfaces of the positive electrode current collector.

### (2) Production of negative electrode

A belt-like electrolytic copper foil (thickness 15 µm) was prepared as a negative electrode current collector.

### (3) Substrate layer

A microporous thin film made of polyethylene with a thickness of 20 µm was prepared.

### (4) Formation of spacer layer on principal surface of substrate layer

A liquid dispersion of a spacer material was prepared by mixing 60 parts by volume of insulating particles (median diameter 3 µm, volume resistivity 10¹⁴ Ω·cm), 39 parts by volume of alkyd resin serving as a binder resin, 1 part by volume of CMC (sodium salt), and water serving as a dispersion medium.

Next, using a dispenser, a spacer layer having a pattern as illustrated FIGS. 3 and 4 was formed on one surface of the microporous thin film. First, the liquid dispersion of the spacer material was dispensed onto the microporous thin film in a honeycomb design pattern, and the applied film was vacuum-dried, to form a second protruding portion. Then, the dispersion of the spacer material was dispensed onto the microporous thin film in a predetermined pattern of stripes, so as to overlap the honeycomb design pattern, and the applied film was vacuum-dried, to form a first protruding portion. The first protruding portion had an intermittent pattern of multiple stripes extending parallel to the longitudinal direction (second direction) of the microporous thin film, which were formed so as to have equal intervals therebetween in the first direction.

The line width of the first protruding portion was set to 1 mm, and the line width of the second protruding portion was set to 0.3 mm.

The proportion of the area covered with the first protruding portion (the ratio of the A regions to the total of the A regions and the B regions) in the principal surface of the substrate layer was set to 10%.

The proportion of the area covered with the second protruding portion (the ratio of the C regions to the total of the C regions and the D regions) in the principal surface of the substrate layer was set to 11.6%.

### (5) Preparation of nonaqueous electrolyte

Ethylene carbonate (EC) and dimethyl carbonate (DMC) were mixed in a volume ratio of EC:DMC = 30:70, and in the resultant mixed solvent, LiPF₆ was dissolved at a concentration of 1 mol/L, and LiBF₂(C₂O₄) was dissolved at a concentration of 0.1 mol/L, respectively, to prepare a liquid nonaqueous electrolyte.

### (6) Assembling of battery

In an inert gas atmosphere, the positive electrode and the negative electrode current collector were wound spirally, with the separator interposed therebetween, to prepare an electrode group. At this time, the separator was placed so that the spacer layer faced the negative electrode. The electrode group was housed in a bag-shaped outer body formed of a laminate sheet having an Al layer, and after injecting the nonaqueous electrolyte thereinto, the outer body was sealed to complete a lithium secondary battery Al.

### <<Example 2>>

A lithium secondary battery A2 was fabricated in the same manner as in Example 1, except that in the formation of spacer layer (4), the line width of the second protruding portion was changed to 0.15 mm (the ratio of the C regions to the total of the C regions and the D regions was 5.9%).

### <<Example 3>>

A lithium secondary battery A3 was prepared in the same manner as in Example 1, except that in the formation of spacer layer (4), the line width of the second protruding portion was changed to 0.075 mm (the ratio of the C regions to the total of the C regions and the D regions was 3%).

### <<Example 4>>

A lithium secondary battery A4 was fabricated in the same manner as in Example 1, except that in the formation of spacer layer (4), the thickness of the second protruding portion was changed as shown in Table 1.

### <<Example 5>>

A lithium secondary battery A5 was fabricated in the same manner as in Example 1, except that in the formation of spacer layer (4), the line width of the first protruding portion was changed to 1.1 mm.

### <<Example 6>>

A lithium secondary battery B1 was fabricated in the same manner as in Example 1, except that in the formation of spacer layer (4), only the first protruding portion was formed without forming the second protruding portion.

### <<Comparative Example 1>>

A lithium secondary battery B2 was fabricated in the same manner as in Example 1, except that in the formation of spacer layer (4), only the second protruding portion was formed without forming the first protruding portion, and the thickness of the second protruding portion was changed as shown in Table 1.

For each of the obtained batteries, a longitudinal section including the winding axis of the electrode group was photographed using X-ray CT. Then, one of the rows formed by a plurality of cross sections of the first protruding portions was selected at random, and each overlapping ratio was calculated from each overlapping width.

### <Overlapping ratio A>

The ratio of the overlapping width of any 10 pairs of the first protruding portions adjacent to each other in the radial direction of the X-ray CT image (longitudinal section), to the line width of the first protruding portion.

### <Overlapping ratio B>

The ratio of the average overlapping width of the cross sections of the first protruding portions adjacent to each other within a randomly selected row, to the line width of the first protruding portion

### <Overlapping ratio C>

The ratio of the maximum value among the overlapping widths of the cross sections of the first protruding portions in any four consecutive layers within a randomly selected row, to the line width of the first protruding portion

### <Overlapping ratio D>

The ratio of the overlapping width between the cross section of the first protruding portion in the innermost layer adjacent to the positive electrode or the negative electrode and the cross section of the first protruding portion in the outermost layer adjacent to the positive electrode or the negative electrode, to the line width of the first protruding portion

The results are shown in Table 1.

**[Table 1]**

| | First pattern | Line width (mm) | Thickness (µm) | Second pattern | Line width (mm) | Thickness (µm) | Overlapping ratio (%) | | | |
|---|---|---|---|---|---|---|---|---|---|---|
| | | | | | | | A | B | C | D |
| A1 | stripe | 1 | 40 | honeycomb | 0.3 | 20 | 59 | 62 | 78 | 34 |
| A2 | stripe | 1 | 40 | honeycomb | 0.15 | 15 | 62 | 71 | 81 | 31 |
| A3 | stripe | 1 | 40 | honeycomb | 0.075 | 10 | 67 | 69 | 84 | 45 |
| A4 | stripe | 1 | 40 | honeycomb | 0.3 | 40 | 68 | 71 | 86 | 49 |
| A5 | stripe | 1.1 | 40 | honeycomb | 0.3 | 20 | 51 | 53 | 59 | 19 |
| A6 | stripe | 1 | 40 | - | - | - | 31 | 31 | 31 | 0 |
| B1 | - | - | - | honeycomb | 0.3 | 40 | 0 | 0 | 0 | 0 |

### [Evaluation 1]

Before assembling the battery, the appearance of the separator was observed. If wrinkles were observed, it was evaluated as "Bad", and if wrinkles were not observed, it was evaluated as "Good".

### [Evaluation 2]

Before assembling the battery, the amount of meandering of the spacer layer was measured with an electron microscope. Specifically, the distance from the end face of the first protruding portion formed on the outermost side in the first direction to the end of the separator was measured, and the difference between the maximum and minimum values of the measured values was measured for each separator length used in one cell, to calculate an average value thereof.

### [Evaluation 3]

With respect to each of the obtained batteries, in a 25 °C constant temperature bath, a charge-discharge cycle test was performed under the following conditions. The rest time between charging and discharging was set to 20 minutes.

### (Charging)

A constant-current charging was performed at a current of 2.15 mA per unit area (square centimeter) of the electrode until the battery voltage reached 4.1 V, and then, a constant-voltage charging was performed at a voltage of 4.1 V until the current value per unit area of the electrode reached 0.54 mA.

### (Discharging)

A constant-current discharging was performed at a current of 2.15 mA per unit area of the electrode until the battery voltage reached 3.75 V.

### (Expansion rate of electrode group)

With the above charging and discharging taken as one cycle, the fabricated battery was charged up to the 2nd cycle. Then, the battery before charging and discharging and the battery having been charged up to the 2nd cycle were disassembled, and a laminate of the positive electrode, the negative electrode, and the two separators present on both sides of the negative electrode were taken out. Disassembling was performed in an inert gas atmosphere. The taken-out laminate of the positive electrode, the negative electrode, and the separators was washed with dimethyl carbonate, dried, and the thickness of the laminate was measured. The thickness of the laminate was measured using a PEACOCK digital thickness gauge G2-205M. Then, the thickness was measured at any five points in the laminate, and the arithmetic average of the five measured values was calculated as an average thickness of the laminate. Next, the average thickness X was obtained by subtracting the thickness of the two substrate layers from this average thickness. The ratio (%) of the average thickness X at the 2nd cycle to the average thickness X before charging and discharging was calculated as an expansion rate of the electrode group. In other words, the expansion rate (%) of the electrode group is the ratio of the average thickness X at the 2nd cycle when the average thickness X before charging and discharging is taken as 100%.

### (Discharge capacity retention rate)

With the above charging and discharging taken as one cycle, 100 cycles of charging and discharging were performed. The ratio (%) of the discharge capacity at the 100th cycle to the discharge capacity at the 1st cycle was calculated as the discharge capacity retention rate. The discharge capacity at the 1st cycle was also defined as an initial discharge capacity.

The evaluation results are shown in Table 2, together with the structure of the spacer layer. In Table 2, the expansion rate of the electrode group is expressed as a relative value with the expansion rate of the battery A2 taken as 100.

**[Table 2]**

| | First pattern | Line width (mm) | Thickness (µm) | Second pattern | Line width (mm) | Thickness (µm) | Evaluation 1 Wrinkles | Evaluation 2 Amount of meandering (µm) | Evaluation 3 Expansion rate (%) | Evaluation 4 Retention rate (%) |
|---|---|---|---|---|---|---|---|---|---|---|
| A1 | stripe | 1 | 40 | honeycomb | 0.3 | 20 | Good | 71 | 102 | 90 |
| A2 | stripe | 1 | 40 | honeycomb | 0.15 | 15 | Good | 84 | 100 | 94 |
| A3 | stripe | 1 | 40 | honeycomb | 0.075 | 10 | Good | 83 | 101 | 95 |
| A4 | stripe | 1 | 40 | honeycomb | 0.3 | 40 | Good | 78 | 106 | 81 |
| A5 | stripe | 1.1 | 40 | honeycomb | 0.3 | 20 | Good | 95 | 104 | 90 |
| A6 | stripe | 1 | 40 | - | - | - | Bad | 681 | 110 | 91 |
| B1 | - | - | - | honeycomb | 0.3 | 40 | Good | 56 | 111 | 82 |

The capacity retention rates of the batteries A1 to A6 of Examples were favorable, which was presumably because the increase in internal resistance of the battery was suppressed, and the occurrence of wrinkles was suppressed, so that sufficient space was formed within the electrode group, and the swelling of the electrode group was significantly suppressed. In particular, when the line width of the second protruding portion was 20% or less of the line width of the first protruding portion, specifically 5% to 15%, more favorable results were obtained. It would also be understood that favorable results are obtained when the thickness of the second protruding portion is smaller than the thickness of the first protruding portion. In the battery A5 in which the line width of the first protruding portion was wider than the others, although the occurrence of wrinkles failed to be sufficiently suppressed, and the overlapping width of the cross sections of the first protruding portions was somewhat reduced, the results were almost favorable. Note that in the battery A6 in which the spacer layer had only the first protruding portion, the occurrence of wrinkles failed to be sufficiently suppressed, the overlapping width of the cross sections of the first protruding portions was reduced, and the expansion rate was increased. In the battery B1, in which the spacer layer had only the second protruding portion, the expansion rate was further increased, and the capacity retention rate was insufficient.

### [Industrial Applicability]

The lithium secondary battery of the present disclosure is applicable to electronic equipment, such as cellular phones, smart phones, and tablet terminals, electric cars including hybrids and plug-in hybrids, storage batteries for home appliances combined with a solar cell, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: : lithium secondary battery
- 11: : positive electrode
- 12: : negative electrode
- 14: : electrode group
- 14s: : space
- 50: : separator
- 50A: : substrate layer
- 50B: : spacer layer
- 51: : porous sheet
- 52: : composite material layer
- 53: : first protruding portion
- 54: : second protruding portion

## Claims

1. A lithium secondary battery, comprising:
a positive electrode, a negative electrode, a separator disposed between the positive electrode and the negative electrode, and a nonaqueous electrolyte, wherein
the positive electrode and the negative electrode are wound with the separator interposed between the positive electrode and the negative electrode, to constitute an electrode group having a plurality of turns,
at the negative electrode, lithium metal deposits during charging, and the lithium metal dissolves during discharging,
the separator has an elongated shape having a length D1 in a first direction parallel to a winding axis of the electrode group, and a length D2 in a second direction perpendicular to the first direction, where D1 < D2,
the separator has a substrate layer, and a spacer layer,
the spacer layer includes a linear first protruding portion having a first pattern, and
in a longitudinal section including the winding axis of the electrode group, a plurality of cross sections of the first protruding portions are aligned in a radial direction of the longitudinal section, forming a row.

2. The lithium secondary battery according to claim 1, wherein, in the radial direction of the longitudinal section, overlapping widths of any 10 pairs of cross sections of the first protruding portions adjacent to each other are half or more a line width of the first protruding portion.

3. The lithium secondary battery according to claim 1, wherein, within the row, an average overlapping width of cross sections of the first protruding portions adjacent to each other is half or more a line width of the first protruding portion.

4. The lithium secondary battery according to claim 1, wherein, within the row, all of overlapping widths of cross sections of the first protruding portions in any four consecutive layers are half or more a line width of the first protruding portion.

5. The lithium secondary battery according to claim 1, wherein, within the row, a cross section of the first protruding portion in an innermost layer adjacent to the positive electrode or the negative electrode overlaps a cross section of the first protruding portion in an outermost layer adjacent to the positive electrode or the negative electrode.

6. The lithium secondary battery according to claim 1, wherein, in the first direction of the longitudinal section, intervals between the rows adjacent to each other are equal.

7. The lithium secondary battery according to any one of claims 1 to 6, wherein the spacer layer includes a linear second protruding portion having a second pattern different from the first pattern.

8. The lithium secondary battery according to claim 7, wherein the first pattern and the second pattern are partially overlapped with each other.

9. The lithium secondary battery according to claim 7, wherein a thickness T1 of the first protruding portion is larger than a thickness T2 of the second protruding portion.

10. The lithium secondary battery according to claim 9, wherein the thickness T1 of the first protruding portion is three times or more as large as the thickness T2 of the second protruding portion.

11. The lithium secondary battery according to any one of claims 1 to 6, wherein the first protruding portion has a plurality of linear protruding portions parallel to the second direction.

12. The lithium secondary battery according to claim 7, wherein the second protruding portion is a protruding portion formed along the second pattern of a geometric design.

13. The lithium secondary battery according to claim 12, wherein the geometric design is a honeycomb design.

14. The lithium secondary battery according to claim 7, wherein the first protruding portion and the second protruding portion are formed respectively on one and the other principal surfaces of the substrate layer.

15. A separator which has an elongated shape having a length D1 in a first direction and a length D2 in a second direction perpendicular to the first direction, where D1<D2, comprising:
a substrate layer, and a spacer layer, wherein
the spacer layer includes a linear first protruding portion having a first pattern, and
when a positive electrode and a negative electrode are wound with the separator interposed between the positive electrode and the negative electrode, to constitute an electrode group having a plurality of turns, the electrode group having a winding axis parallel to the first direction,
in a longitudinal section including the winding axis of the electrode group, a plurality of cross sections of the first protruding portions are aligned in a radial direction of the longitudinal section, forming a row.

16. The separator according to claim 15, wherein, in the radial direction of the longitudinal section, an overlapping width of the first protruding portions adjacent to each other is half or more a line width of the first protruding portion.

17. The lithium secondary battery according to claim 15, wherein, within the row, an average overlapping width of cross sections of first protruding portion adjacent to each other is half or more a line width of the first protruding portion.

18. The lithium secondary battery according to claim 15, wherein, within the row, all of overlapping widths of cross sections of the first protruding portions in any four consecutive layers are half or more a line width of the first protruding portion.

19. The separator according to claim 15, wherein within the row, a cross section of the first protruding portion in an innermost layer adjacent to the positive electrode or the negative electrode overlaps a cross section of the first protruding portion in an outermost layer adjacent to the positive electrode or the negative electrode.

20. The separator according to claim 15, wherein, in the first direction of the longitudinal section, intervals between the rows adjacent to each other are equal.

21. The separator according to any one of claims 15 to 20, wherein the spacer layer includes a linear second protruding portion having a second pattern different from the first pattern.

22. The separator according to claim 21, wherein the first pattern and the second pattern are partially overlapped with each other.

23. The separator according to claim 21, wherein a thickness T1 of the first protruding portion is larger than a thickness T2 of the second protruding portion.

24. The separator according to claim 23, wherein the thickness T1 of the first protruding portion is three times or more as large as the thickness T2 of the second protruding portion.

25. The separator according to any one of claims 15 to 20, wherein the first protruding portion has a plurality of linear protruding portions parallel to the second direction.

26. The separator according to any one of claims 15 to 20, wherein the second protruding portion is a protruding portion formed along the second pattern of a geometric design.

27. The separator according to claim 26, wherein the geometric design is a honeycomb design.

28. The separator according to claim 21, wherein the first protruding portion and the second protruding portion are formed respectively on one and the other principal surfaces of the substrate layer.
